Europäisches Patentamt

European Patent Office

Office européen des brevets

(19)

(11) Numéro de publication: **0 270 462 B1**

## (12) FASCICULE DE BREVET EUROPEEN

(45) Date de publication de fascicule du brevet:
24.04.91

(51) Int. Cl.⁵: **B29C 67/22**

(21) Numéro de dépôt: **87402754.3**

(22) Date de dépôt: **03.12.87**

(54) **Procédé et appareil pour la fabrication d'un article composite de section constante comprenant une âme et une enveloppe extérieure et article composite en résultant.**

(30) Priorité: **04.12.86 FR 8616975**

(43) Date de publication de la demande:
**08.06.88 Bulletin 88/23**

(45) Mention de la délivrance du brevet:
**24.04.91 Bulletin 91/17**

(84) Etats contractants désignés:
**AT BE CH DE ES GB GR IT LI LU NL SE**

(56) Documents cités:
| | |
|---|---|
| **DD-A- 144 734** | **FR-A- 2 528 350** |
| **GB-A- 1 363 469** | **US-A- 2 609 312** |
| **US-A- 3 413 388** | **US-A- 4 564 487** |

(73) Titulaire: **SONOCO GUNTHER**
**53, rue de la Papeterie**
**F-70800 Fontaine Les Luxeuil(FR)**

(72) Inventeur: **Briand, Jean-Patrick**
**53, rue de la Papeterie**
**F-70800 Fontaine Les Luxeuil(FR)**
Inventeur: **Choulier, Dominique**
**47, rue Jean Moulin**
**F-70300 Luxeuil Les Bains(FR)**

(74) Mandataire: **DEGRET, Jacques**
**Cabinet Degret 24, place du Général Catroux**
**F-75017 Paris(FR)**

## Description

La présente invention est relative à la fabrication, notamment mais non exclusivement en continu, d'un article composite de section constante, pleine ou creuse, ledit article comprenant une âme et une enveloppe extérieure qui entoure au moins une fois ladite âme et adhère fermement à celle-ci.

La présente invention a donc pour objets un procédé et un appareil pour la fabrication d'un tel article composite, ainsi que tout article composite résultant de cette fabrication.

L'invention s'applique en particulier, mais non limitativement, aux articles de ce genre qui sont utilisés pour l'emballage, notamment pour sa protection et ses renforcements, pour le génie civil, en signalisation et en coffrage, pour l'industrie du meuble, pour l'agriculture et pour l'isolation.

Un premier but de l'invention est de fournir un article composite du genre précité, qui présente des caractéristiques mécaniques et dimensionnelles intéressantes, même avec une très faible densité apparente, grâce à la continuité de l'enveloppe, d'une part, à son assemblage sur l'âme, d'autre part, qui confèrent à l'article une très grande inertie. De ce fait, par sa rigidité, l'article peut supporter des charges axiale et radiale importantes. Un autre but de l'invention est de fournir un article du genre en question qui présente une excellente résistance aux basses et hautes températures, aux agents extérieurs tels l'humidité et les produits chimiques, et aux chocs, l'enveloppe extérieure agissant en la circonstance comme un écran protecteur de l'âme, quel que soit le matériau constitutif de celle-ci, même si à cet égard l'on emploie des matières thermoplastiques.

Un autre but de l'invention est de fournir un article du genre en question qui puisse être fabriqué de manière simple et économique et qui, fini, puisse être travaillé et associé à d'autres produits suivant des procédés traditionnels d'usinage, de perçage, de clouage, d'agrafage, de vissage ou de collage par exemple.

Il est déjà connu de fabriquer et d'utiliser des articles composites profilés formés d'une âme en matière thermoplastique, chargée ou non, et d'une enveloppe extérieure, généralement en un matériau souple, qui entoure entièrement et continûment ladite âme par recouvrement de toutes ses faces longitudinales et qui protège ladite âme, par association à celle-ci, par adhérence totale et permanente.

De tels articles composites profilés se trouvent décrits dans les brevets FR-A-2.455.968, FR-A-2.528.350 et US-A-4.564.487.

Selon le document FR-A-2.455.968, on forme l'âme à partir d'une matière thermoplastique synthétique distribuée en particules ou en granulés de manière à former un mat, on chauffe ce mat jusqu'au point de ramollissement de la matière thermoplastique en le transportant à travers un four, et enfin on comprime le mat ramolli après l'avoir encadré d'une ou de plusieurs feuilles d'un matériau souple, distribuées sous le mat et autour du mat, de façon qu'elles enveloppent totalement ce dernier et qu'elles y adhèrent au moment de la compression.

Selon le document FR-A-2.528.350, on forme l'âme à partir d'une matière thermoplastique distribuée en continu, sous la forme d'un boudin chaud et mou, par une extrudeuse, par une presse à injection ou par tout dispositif similaire susceptible de chauffer la matière thermoplastique et de l'amener jusqu'à sa température de ramollisseemnt, puis l'on reprend ce boudin par une ou plusieurs feuilles d'un matériau souple, qui le soutiennent, et l'on transporte l'ensemble boudin-feuilles jusqu'à une calandre pour, en tirant sur la ou les feuilles, simultanément, envelopper continûment le boudin par la ou les feuilles, et comprimer l'ensemble alors que la matière thermoplastique est encore suffisamment chaude, de telle manière qu'elle adhère fermement et définitivement à son enveloppe.

Pour les deux fabrications exposées ci-dessus, il est clair que l'article composite profilé obtenu est d'une densité relativement importante puisqu'il y a compression de la matière thermoplastique lors des opérations finales consistant à faire adhérer l'âme et son enveloppe.

Un autre des buts essentiels de l'invention est de fournir un article composite profilé présentant, après sa mise en oeuvre, une très faible densité apparente, comprise entre 10 Kg/m$^3$ et 500 Kg/m$^3$ et voisine de préférence d'environ 50 Kg/m$^3$.

Le brevet US-A-4.564.487 décrit un procédé et une installation pour la fabrication d'un tel article composite profilé à faible densité apparente, en forme de tube. La matière constituant l'âme de ce tube est une mousse d'un matériau isolant prise entre une enveloppe intérieure et une enveloppe extérieure de papier. Pour la fabrication d'un tel tube, on réalise tout d'abord l'enveloppe intérieure en enroulant une bande de papier autour d'un cylindre plein ou creux, puis on commence à former l'enveloppe extérieure en introduisant une autre bande de papier dans un manchon dont l'axe longitudinal est confondu avec celui du cylindre. La matière qui va s'expanser entre les deux feuilles de papier pour former l'âme est introduite en amont du manchon, dans une zone où nécessairement l'enveloppe extérieure de papier n'est donc pas encore fermée. Cette technique de fabrication présente en conséquence divers inconvénients :

- la matière qui va constituer l'âme ne peut pas être pour partie gazeuse, sinon le gaz s'échappe ; cette matière est donc nécessairement liquide ou pâteuse, et il en résulte qu'il s'agit exclusivement et limitativement de polyuréthane.

- le polyuréthane s'expansant entre une enveloppe intérieure déjà formée et une enveloppe extérieure en cours de formation, le manchon contre lequel s'appuie ladite enveloppe extérieure doit nécessairement avoir une longueur égale à la longueur que parcourt le tube en formation jusqu'à l'expansion définitive de la mousse ; en conséquence, si, comme cela est le cas, le manchon est court, la vitesse de déplacement du tube en formation est lente ; en effet, si on veut augmenter la vitesse, il faut aussi augmenter en même proportion la longueur du manchon, et ceci est vite limité par des problèmes d'encombrement et par les difficultés à fabriquer un manchon qui devrait avoir quelques dizaines de mètres de longueur.

La présente invention a donc pour premier objet un procédé de fabrication d'un article composite de section constante, pleine ou creuse, ledit article comprenant une âme et une enveloppe extérieure qui entoure au moins une fois ladite âme et adhère fermement à celle-ci, ledit procédé étant caractérisé en ce qu'il consiste : à conformer au moins une bande de matière souple autour d'un élément creux fixe pour constituer l'enveloppe ; à entraîner en continu l'enveloppe ainsi formée autour de l'élément creux fixe, et jusqu'à au moins l'extrémité libre dudit élément creux fixe ; et à distribuer en continu à partir d'une réserve, où elle est fluide ou pâteuse, la matière de constitution de l'âme, à travers l'élément creux fixe et jusqu'à l'extrémité libre de ce dernier, pour que, à la sortie de l'élément creux, ladite matière soit reçue dans le moule fermé que constitue l'enveloppe, dès sa sortie de l'élément creux, et s'y développe en refroidissant et en adhérant à ladite enveloppe.

Selon cette technique, l'enveloppe est totalement conformée avant de recevoir la matière de constitution de l'âme ; autrement dit, l'enveloppe joue le rôle du moule à l'intérieur duquel la matière de constitution de l'âme refroidit, durcit et se développe.

Les inconvénients exposés à propos de la fabrication du tube décrit selon le brevet US-A-4.564.487 sont éliminés. En effet, puisque la matière de constitution de l'âme est introduite dans un moule déjà fermé en totalité, il est possible de travailler avec des matières qui, pour s'expanser, demandent à être délivrées avec un gaz en suspension dans la matière ; il est même possible d'utiliser un gaz sous forte pression ; notamment pour former la matière expansée de l'âme, on peut, grâce à l'invention, employer du polyéthylène, du polypropylène, du polystyrène ou du chlorure de polyvinyle délivré avec un gaz neutre tel le fréon qui, en se détendant, va former dans la matière une structure à cellules ouvertes ou fermées, selon le cas. En outre, grâce toujours au fait que le moule est déjà fermé dans la zone où la matière qui va s'expanser est introduite, il n'est pas utile d'entourer l'enveloppe par un manchon de protection ; l'installation est ainsi d'un encombrement réduit et aussi elle permet de travailler à grande vitesse.

Trois autre avantages de cette technique résultent du fait que :

- l'on peut travailler à de très grandes vitesses, de l'ordre de 60 à 100 m/mn, du fait que l'on entraîne l'article par son enveloppe sans jamais affecter la matière constitutive de son âme,
- l'on délivre un produit fini non-adhérant si la face extérieure de l'enveloppe est à l'origine choisie pour être non collante,
- elle évite la nécessité de refroidir l'âme, quelle que soit la matière la constituant et quelle que soit la température à laquelle elle est distribuée liquide ou pâteuse à partir de sa réserve.

Pendant sa fabrication, l'article composite est avantageusement entraîné par une poussée ou par une traction exercée sur l'enveloppe en une zone située en amont de l'extrémité libre de sortie de l'élément creux fixe. Ainsi, l'entraînement s'obtient en agissant sur l'enveloppe exclusivement, en une zone où au surplus elle est conformée et maintenue dans cette forme par l'élément creux fixe. La matière de constitution de l'âme n'est donc pas soumise directement à l'entraînement, mais seulement indirectement, lorsqu'elle débouche dans le moule que forme l'enveloppe. En d'autre termes, l'entraînement peut se faire à la vitesse maximale que tolère l'enveloppe sans être déchirée, laquelle est très nettement supérieure à la vitesse maximale que peut tolérer la matière de l'âme sans être rompue.

Après sa fabrication, l'article composite est avantageusement tronçonné à la longueur voulue, à l'aide d'un outil de coupe agissant en aval de l'extrémité libre de sortie de l'élément creux fixe.

Suivant un premier mode de mise en oeuvre, la bande est présentée longitudinalement par rapport à l'élément creux fixe et ses bords longitudinaux sont progressivement rabattus l'un vers l'autre pour venir en chevauchement.

Suivant un second mode de mise en oeuvre, la bande est présentée obliquement par rapport à l'axe de l'élément creux fixe, pour être enroulée en hélice autour dudit élément creux.

Selon une première variante de conception, on utilise comme matière de constitution de l'âme une matière expansée, à cellules ouvertes ou fermées, issue de la transformation d'un matériau thermoplastique en association avec un agent de nucléation, par exemple un gaz.

Selon une seconde variante de conception, on réalise la matière de constitution de l'âme à partir d'au moins deux constituants, et l'on mélange ces deux constituants à l'intérieur de l'élément creux fixe, à proximité de son extrémité libre, chaque constituant étant distribué dans l'élément creux fixe sous forme liquide ou pâteuse à partir d'une reserve placée en amont dudit élément creux fixe.

La présente invention a également pour objet un appareil pour la fabrication d'un article composite de section constante comprenant une âme et une enveloppe extérieure qui entoure au moins une fois ladite âme et adhère fermement à celle-ci, ledit appareil comprenant des moyens pour délivrer en continu au moins une bande de matière souple, un élément creux fixe pour réceptionner la bande et pour conformer l'enveloppe à partir de cette bande, et des moyens pour distribuer en continu, à partir d'une réserve, la matière de constitution de l'âme alors fluide ou pâteuse jusqu'à la mettre en contact avec l'enveloppe, caractérisé en ce qu'il comporte : des moyens pour réceptionner chaque bande et la conformer autour de l'élément creux fixe, pour constituer ainsi l'enveloppe; des moyens pour entraîner en continu l'enveloppe ainsi formée autour de l'élément creux fixe, jusqu'à au moins l'extrémité libre de ce dernier; et des moyens pour faire passer la matière de constitution de l'âme depuis la réserve jusqu'à l'extrémité libre de l'élément creux fixe, au travers dudit élément, et pour distribuer ladite matière à l'intérieur du moule fermé que constitue l'enveloppe pour qu'elle s'y développe en refroidissant et en adhérant à ladite enveloppe.

Des moyens d'entraînement de l'article composite, par poussée ou traction sur cet article, sont avantageusement placés en amont de l'extrémité libre de l'élément creux fixe, et lorsque ces moyens d'entraînement opèrent par traction sur l'enveloppe, ils débordent de préférence l'élément creux fixe largement du côté de son extrémité libre.

Dans le cas où l'enveloppe se présente sous la forme d'une ou de plusieurs bandes distribuées longitudinalement, les moyens de conformation de chaque bande sont constitués par un guide fixe à profil évolutif, ledit guide étant propre à recevoir la bande en position longitudinale par rapport à l'élément creux fixe et à rabattre progressivement les bords de la bande l'un vers l'autre jusqu'à les amener en chevauchement.

Dans le cas où l'enveloppe est constituée par au moins une bande en hélice, les moyens de conformation et les moyens d'entraînement de la bande sont constitués par une courroie mobile ou analogue qui plaque la bande en hélice sur l'élément creux fixe et la pousse axialement vers l'extrémité libre de celui-ci.

Selon une variante avantageuse, des moyens sont prévus pour déposer un adhésif sur au moins un bord de la bande avant sa conformation.

Selon une autre variante, l'appareil peut comporter, en bout de l'élément creux fixe, des moyens pour former au moins un évidement intérieur à l'article composite à délivrer. Selon encore une autre variante, l'appareil peut comporter des moyens d'aspiration de l'enveloppe qui coopèrent avec des moyens d'entraînement.

En fonction de la matière choisie pour constituer l'âme, l'appareil peut comporter des moyens pour distribuer, à l'intérieur de l'élément creux fixe, un mélange de matière thermoplastique comportant un agent de nucléation, par exemple un gaz, apte à former une mousse à cellules ouvertes ou fermées lors de son expansion; en variante, il peut comporter des moyens pour mélanger tous les constituants de la matière de constitution de l'âme, lesdits moyens étant de préférence disposés à proximité de l'extrémité libre de l'élément creux fixe.

La présente invention a pour troisième objet un article composite de section constante, pleine ou évidée, destiné à divers usages, et notamment un produit de forme allongée tel un profilé ou une plaque, du type comprenant une âme et une enveloppe extérieure entourant au moins une fois ladite âme et adhérant fermement à celle-ci, ledit article, obtenu par la mise en oeuvre du procédé tel que décrit ci-dessus, étant caractérisé en ce que la densité de l'âme, et par suite celle de l'article, sont comprises entre environ 10 Kg/m$^3$ et 500 Kg/m$^3$, la valeur préférentielle étant voisine de 50 Kg/m$^3$, et en ce que la matière formant ladite âme appartient au groupe constitué par le polyéthylène le polypropylène, le polystyrène, et le chlorure de polyvinyle.

Suivant l'application envisagée, l'article composite peut se présenter sous les formes les plus diverses, par exemple sous la forme d'un cylindre, d'une latte, d'un panneau ou d'une dalle, et avoir les sections les plus diverses, par exemple circulaire, ovale ou polygonale, et alors carrée, rectangulaire, hexagonale ou octogonale.

L'article composite selon l'invention peut être à section pleine mais également à section allégée, avec un évidement central ou des évidements périphériques.

L'enveloppe est constituée par un matériau de base se présentant en feuille souple, distribuée de préférence par bande de très grande longueur, ledit matériau appartenant au groupe constitué par le papier, la cartonnette, les matières textiles, les matières synthétiques et notamment thermoplastiques en film, les matières fibreuses non tissées, naturelles ou synthétiques, et par toutes les combinaisons de ces matières, par exemple par un complexe lui-même obtenu par association de plusieurs des matériaux cités ci-dessus ou par un composite en feuille du type formé d'une matrice thermoplastique renforcée de fils, de fibres ou d'un treillis. Il est également possible de recourir à l'emploi de complexes eux-mêmes issus de l'association de matériaux à faible densité apparente. Une autre possibilité consiste à recouvrir l'enveloppe, sur tout ou partie de sa face extérieure, par une mousse expansée.

Suivant le mode de mise en oeuvre qui a été proposé pour le procédé ci-dessus, l'article composite obtenu est caractérisé en ce que son enveloppe extérieure est à enroulement hélicoïdal.

Pour mieux faire comprendre l'objet de la présente invention, on va en décrire ci-après, à titre d'exemples purement illustratifs et non limitatifs, diverses formes de réalisation en référence aux dessins annexés sur lesquels :

- les figures 1 à 6 sont des coupes transversales schématiques montrant diverses sections d'un article composite -profilés et plaques- réalisable à partir du procédé selon l'invention,
- les figures 7 à 11 sont des vues en perspective montrant schématiquement divers agencements d'enveloppe(s),
- la figure 13 est une vue latérale schématique d'un appareil suivant un premier mode de réalisation pour la fabrication de l'article composite suivant l'invention,
- les figures 14 à 16 sont des coupes transversales schématiques de l'appareil de la figure 13, respectivement suivant les lignes XIV-XIV, XV-XV et XVI-XVI,
- la figure 17 est une coupe longitudinale de l'appareil prise dans le plan de la figure 13,
- la figure 18 est une vue schématique en élévation d'un appareil suivant un second mode de réalisation pour la fabrication de l'article composite,
- les figures 19 et 20 sont des coupes transversales schématiques de l'appareil de la figure 18, respectivement suivant les lignes XIX-XIX et XX-XX, et
- la figure 21 est une coupe longitudinale schématique prise dans le plan de la figure 18 de l'appareil suivant le second mode de réalisation.

L'article composite profilé selon l'invention qui, suivant sa forme et sa constitution, peut être utilisé dans des applications les plus diverses, comporte, d'une part, une âme (1) constituée en une matière présentant avantageusement une faible densité et, d'autre part, une enveloppe extérieure (2) qui, longitudinalement, entoure au moins une fois l'âme (1) et adhère fermement à celle-ci.

A titre d'exemples non limitatifs, l'âme (1) peut être constituée en une matière thermoplastique ou thermodurcissable cellulaire, alvéolaire ou expansée, notamment en polyéthylène, en polypropylène, en polystyrène, en chlorure de polyvinyle ou en polyuréthane, en une matière fibreuse, notamment à base de fibres cellulosiques de bois ou de papier assemblées ou agglomérées, en une matière de recyclage, initialement vouée au rebut, ou en toutes combinaisons de ces matières.

Egalement suivant les applications, la matière constituant l'âme (1) peut être souple, rigide ou semi-rigide, l'âme étant pleine ou, au contraire, présentant un évidement, par exemple en son centre, ou plusieurs évidements près de sa périphérie grâce au(x)quel(s) l'article est encore allégé.

Egalement à titre d'exemple, la densité de l'âme (1), avantageusement faible, peut être comprise entre 10 Kg/m$^3$ et 500 Kg/m$^3$, avec une valeur préférentielle d'environ 50 Kg/m$^3$.

Quant à la matière constituant l'enveloppe (2), elle est également choisie en fonction de l'application considérée. Par exemple, cette matière peut être du papier, une cartonnette, une matière textile, une matière synthétique, notamment thermoplastique, une matière fibreuse non tissée, naturelle ou synthétique ou une combinaison de ces matières. Ainsi, l'enveloppe est toujours constituée par un matériau de base se présentant en feuille souple, pouvant être délivrée en bandes de très grandes longueurs.

En général, l'enveloppe (2) est constituée par au moins une feuille pleine ou ajourée.

L'enveloppe présente au moins une couche de matière mais, suivant l'application envisagée, il n'est pas exclu de prévoir plusieurs couches superposées au moins partiellement.

Dans la plupart des applications de l'article composite suivant l'invention, celui-ci se présente sous la forme d'un profilé de section constante. Cette section peut être cylindrique, notamment à base circulaire, ovale, ou polygonale, par exemple carrée, rectangulaire ou octogonale. Cette section peut avoir un axe de symétrie, mais elle peut aussi être d'une forme complexe, irrégulière, et être par exemple en forme de L, de T, de H, à branches au surplus égales ou inégales.

L''article selon l'invention peut également se présenter, par exemple, sous la forme d'une latte, d'un panneau ou d'une dalle.

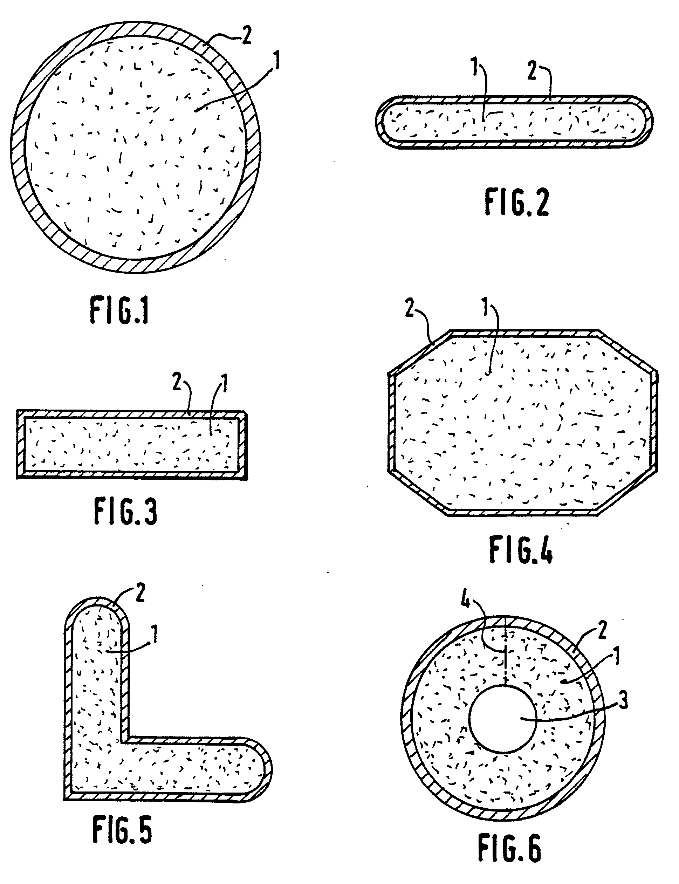

On a représenté aux figures 1 à 6 quelques exemples de section droite pour l'article composite profilé suivant l'invention. Sur la figure 1, la section droite est circulaire ; sur la figure 2, la section droite est en forme d'ovale très aplati correspondant, pour l'article, à une latte, un panneau ou une dalle; sur la figure 3, la section droite est rectangulaire ; sur la figure 4, la section droite est octogonale ; et sur la figure 5, la section droite est en forme de cornière. Sur les figures 1 à 5, l'âme (1) est pleine tandis que, sur la figure 6, l'âme (1), qui a été représentée de forme circulaire à titre d'exemple, présente un évidement (3), par exemple également circulaire et situé en son centre. Dans le mode de réalisation de la figure 6, l'article composite peut présenter une fente longitudinale (4), représentée en traits mixtes, qui relie l'évidement intérieur (3) avec l'extérieur, par exemple pour le passage d'un élément, notamment un tuyau dans le cas de l'application au calorifugeage. L'âme peut également présenter, près de sa périphérie, plusieurs évidements (3) qui contribueront à abaisser la densité apparente de l'article sand abaisser réellement ses caractéristiques mécaniques.

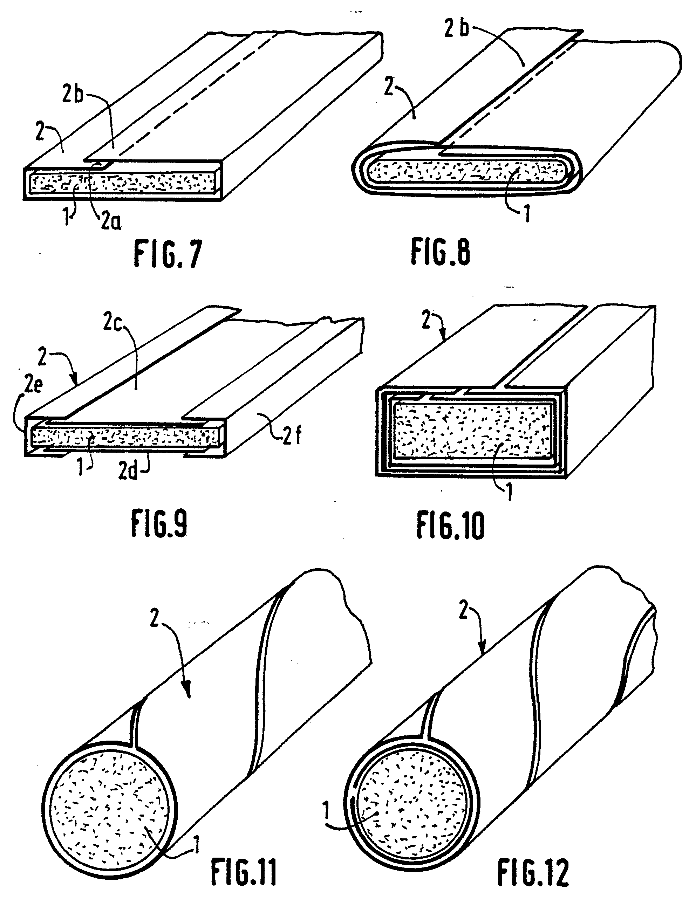

On a représenté aux figures 7 à 12 quelques exemples de réalisation d'un article composite suivant l'invention quant à l'agencement de l'enveloppe extérieure (2), pour diverses formes de section droite. Sur la figure 7, la section droite est rectangulaire et l'enveloppe (2) est disposée longitudinalement en faisant un seul tour sur l'âme (1), ses bords longitudinaux (2a, 2b) parallèles à l'axe du profilé étant en léger chevauchement et étant assemblés par collage ; sur la figure 8, la section droite est en forme d'ovale très aplati et l'enveloppe (2), toujours disposée longitudinalement, entoure l'âme (1) sur environ deux tours, son bord longitudinal (2b) le plus extérieur étant collé sur la spire précédente ; sur la figure 9, la section droite est rectangulaire et l'enveloppe (2), qui s'étend longitudinalement, est composée de quatre éléments, à savoir : deux éléments plans (2c, 2d) qui recouvrent les grandes faces et deux éléments (2e, 2f) qui sont en forme de U et qui viennent recouvrir les petites faces et les bords longitudinaux des éléments (2c, 2d) ; sur la figure 10, la section droite est rectangulaire et l'enveloppe (2), qui est encore longitudinale, est constituée par une pluralité de couches superposées qui sont angulairement décalées et qui sont collées les unes sur les autres ; sur la figure 11, la section droite est circulaire et l'enveloppe (2) est constituée par une couche unique enroulée en hélice ; et, sur la figure 12, la section droite est encore circulaire et l'enveloppe (2) est constituée par la superposition de plusieurs bandes enroulées en hélice. Sur la figure 11, et le cas échéant sur la figure 12, les spires successives se chevauchent de manière que leurs bords puissent être collés.

L'article composite suivant l'invention présente des caractéristiques intéressantes à plusieurs égards. Tout d'abord, la continuité de l'enveloppe (2) et l'assemblage total et permanent de celle-ci sur l'âme (1) confèrent à l'article une très grande inertie ; l'article, grâce à sa rigidité relative, peut supporter des charges axiales et radiales ; l'enveloppe confère à l'article une bonne résistance aux chocs, même si l'âme (1) est fragile ; par un choix judicieux de la matière constituant l'enveloppe (2), l'article présente une bonne résistance à la chaleur, à l'humidité et/ou aux produits chimiques ; l'article peut facilement être usiné ou travaillé suivant les techniques classiques, par exemple par perçage, par fraisage, par clouage, par agrafage, par vissage ou par collage ; grâce à la présence de l'enveloppe (2) et à l'adhérence de celle-ci avec l'âme (1), l'article présente une bonne cohésion, même si l'âme (1) est peu dense et présente peu de cohésion ; au surplus, on peut obtenir pour l'article des cotes de fabrication avec une excellente tolérance qui se maintient dans le temps.

L'enveloppe (2) constitue un masque pour l'âme (1) qui, pour des mêmes propriétés, peut donc être constituée en une matière moins noble et moins onéreuse ; cette enveloppe constitue également un écran entre l'âme (1) et l'extérieur, ce qui est particulièrement intéressant dans le cas, notamment, des industries alimentaires ou analogues ; l'enveloppe (2) peut facilement être imprimée à des fins décoratives ou d'identification ; enfin, si l'enveloppe est choisie en une matière non agressive, au moins en ce qui concerne sa surface extérieure, elle permet de mettre l'article en contact avec tout produit fragile. L'enveloppe peut également être revêtue, sur tout ou partie de sa face extérieure, par une matière expansée.

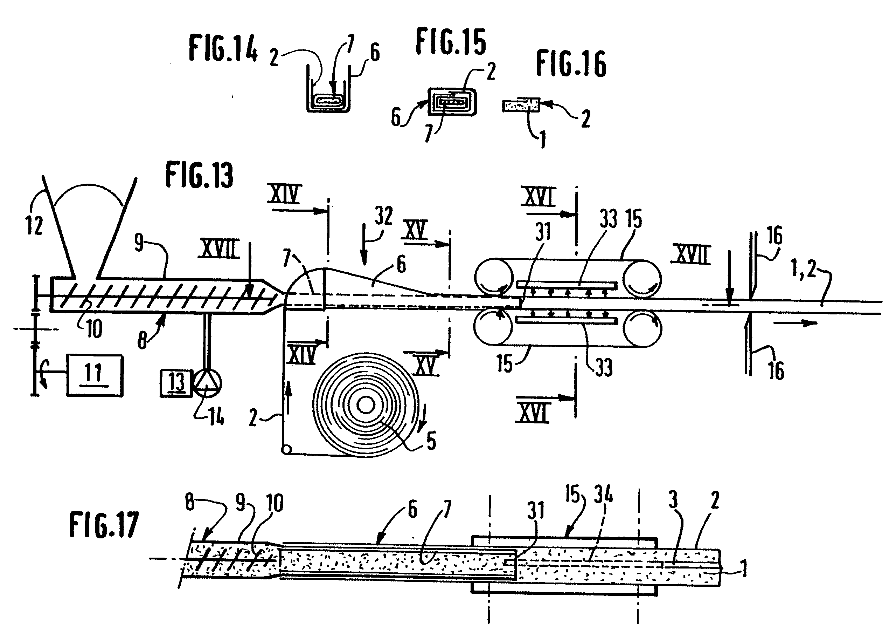

On décrira maintenant, en référence aux figures 13 à 21, deux variantes de procédé et deux appareils pour la fabrication de l'article composite suivant l'invention.

Selon le procédé, on conforme au moins une bande de matière souple autour d'un élément creux fixe pour constituer l'enveloppe, on entraîne en continu l'enveloppe ainsi formée vers l'extremité libre de l'élément creux fixe et on distribue en continu, à partir d'une réserve, où elle est stockée ou préparée fluide ou pâteuse, la matière de constitution de l'âme dans l'élément creux fixe à partir d'une extrémité de celui-ci vers l'extrémité libre pour que, à la sortie de l'élément creux fixe, ladite matière reçue encore fluide et pâteuse dans l'enveloppe préalablement formée se développe dans ladite enveloppe, et y adhère en refroidissant dès sa sortie de l'élément creux fixe.

Dans le premier mode de mise en oeuvre des figures 13 à 17, donné pour exemple de fabrication d'un article de section rectangulaire comprenant une enveloppe constituée d'une bande longitudinale refermée sur elle-même, avec recouvrement partiel, et une âme en une matière thermoplastique expansée, la bande (2) est donc présentée longitudinalement par rapport à l'élément creux fixe et, selon une technique désormais classique, ses bords longitudinaux sont progressivement rabattus l'un vers l'autre pour venir en chevauchement. La bande (2) est délivrée à partir d'une bobine (5) qui est entraînée en rotation par la traction exercée plus en aval sur l'enveloppe (2). La bande est dirigée vers l'extrémité amont d'un guide (6) à profil évolutif qui se referme progressivement vers l'aval pour se terminer en forme de tube à paroi latérale fermée, ou sensiblement fermée.

Le guide (6) reçoit intérieurement l'élément creux fixe (7) qui est constitué par un tube horizontal de section rectangulaire rigoureusement congruente de celle de l'article à réaliser. Ce tube est monté à la sortie d'une extrudeuse à vis (8) qui comporte, de manière habituelle, un fourreau extérieur (9) et une vis transporteuse (10), type vis d'Archimède, entraînée en rotation à partir d'un moteur (11). A son extrémité amont, l'extrudeuse (8) reçoit la matière première destinée à constituer l'âme (1), à partir d'une trémie (12). Au voisinage de son extrémité de sortie, l'extrudeuse peut être alimentée en gaz inerte, par exemple en fréon, à partir d'une source (13), par l'intermédiaire d'une pompe (14).

Au voisinage de l'extrémité commune aval du guide (6) et du tube (7), et en recouvrement partiel de ce tube, est prévu un poste de tirage constitué par deux bandes sans fin (15) qui tournent en sens inverses et qui coopèrent, par leurs faces opposées en vis-à-vis, avec l'enveloppe tubulaire (2) contenant l'âme (1).

En aval des bandes de tirage (15) est prévu un poste de coupe, constitué par au moins une lame tranchante (16), pour effectuer le tronçonnage de l'article à la longueur voulue.

On décrira maintenant brièvement le fonctionnement de l'appareil des figures 13 à 17.

La matière contenue dans la trémie (12), par exemple du polyéthylène, est délivrée en continu par l'extrudeuse (8) à l'extrémité d'entrée du tube (7), conjointement avec le gaz inerte de la réserve (13). Pendant son transfert à l'intérieur du fourreau (9) par la vis (10), le polymère est fondu par conduction thermique contre les parois de l'extrudeuse et il se mélange intimement avec le gaz. La vis (10) se charge de l'homogénéisation et amène le produit visqueux à un niveau de pression élevée. Ensuite, dans le tube (7), la détente du gaz produit une formation homogène de bulles qui sont séparées les unes des autres par une mince couche de polymère. Lors de son cheminement dans le tube (7), le mélange intime du polyéthylène fondu et du gaz se refroidit progressivement et lentement. En même temps, la bande (2), par exemple en papier, est délivrée au guide (6) à partir de la bobine (5), par tirage de la part des bandes sans fin (15). A la sortie du tube (7), au travers d'une filière (31), le mélange du polyéthylène fondu et du gaz est déchargé dans l'enveloppe tubulaire (2) qui a progressivement été formée par le guide à profil évolutif (6). Les bandes de tirage (15) assurent tout à la fois l'évacuation vers l'aval de l'article terminé, le tirage de la bande de papier à partir de la bobine (5) et le maintien de l'enveloppe (2) contre l'action des contraintes induites par l'expansin du polyéthylène à la sortie du tube (7). En outre, ce poste (15) assure la régularité de la vitesse d'évacuation longitudinale de l'article (1, 2). Lorsqu'il vient en contact avec l'enveloppe (2), le polymère adhère fermement à la surface intérieure de l'enveloppe. En aval du poste de tirage (15), le poste de tronçonnage effectue la coupe de l'article à la longueur voulue. Le refroidissement de l'article s'obtient alors naturellement, par transfert de ses calories à l'atmosphère environnante.

Avantageusement, l'appareil qui vient d'être décrit peut comprendre également :

- si les bords longitudinaux de la bande (2) une fois rabattus l'un sur l'autre sont en large chevauchement, un poste (32) permettant d'enduire de colle au moins la face extérieure du bord longitudinal (2a) qui sera recouvert ou au moins la face intérieure du bord longitudinal (2b) qui sera en recouvrement, ledit poste d'enduction (32) étant disposé au plus loin avant l'extrémité aval du guide (6),
- un dispositif à dépression (33) pour maintenir en contact étroit les faces extérieures de l'enveloppe (2) avec les bandes de tirage (15), dès la sortie de l'élément creux (7), à l'endroit où le polyéthylène commence à se développer à l'intérieur de l'enveloppe.

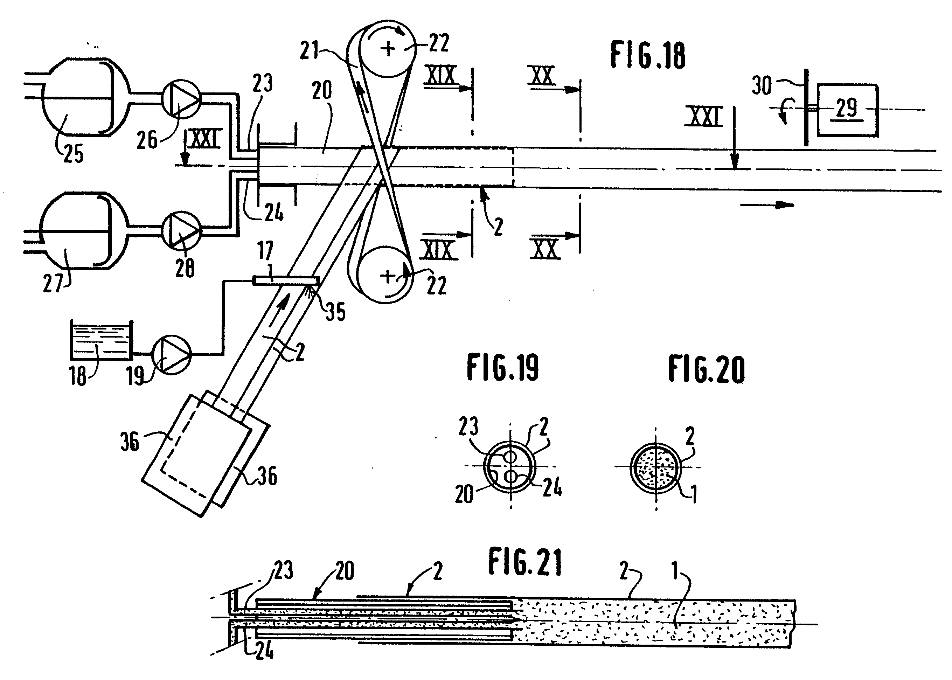

On décrira maintenant le procédé et l'appareil illustrés aux figures 18 à 21, donnés pour exemple de fabrication d'un article de section circulaire comprenant une enveloppe constituée d'une bande enroulée en spirale et une âme en mousse de polyuréthane.

Dans ce cas, la bande destinée à constituer l'enveloppe (2) est présentée obliquement par rapport à l'axe de l'élément fixe creux pour être enroulée en hélice sur celui-ci.

L'appareil comporte un poste de fourniture en continu d'au moins une bande à partir d'au moins une bobine (36). A partir de la bobine (36), la bande passe sous un applicateur (17) qui, à partir d'une réserve (18) et d'une pompe (19), dépose une pellicule (35) de colle sur au moins une partie de la future face externe de la ou des bandes (2) qui sont ensuite dirigées obliquement et tangentiellement vers la surface extérieure de l'élément creux fixe constitué par un tube cylindrique horizontal (20). Ce poste d'enduction n'est mis en fonctionnement que dans le cas où plusieurs bandes de papier viennent en recouvrement l'une de l'autre (figure 12) pour former l'enveloppe (2), ou encore dans le cas où une bande unique est enroulée sur le tube (20) avec chevauchement partiel de ses bords ; dans le premier cas, toutes les bandes sont encollées sur leur face extérieure, sauf la bande la plus extérieure, et dans le second cas seules les parties des bords en chevauchement sont encollées.

La bande est plaquée contre le tube (20) et enroulée et collée sur elle-même par une courroie sans fin (21) dont un brin enveloppe par exemple le tube (20) sur un tour. La courroie (21) passe sur deux cylindres (22) dont l'un au moins est moteur. En même temps qu'elle assure l'enroulement en hélice de la bande sur le tube (20), la courroie (21) chasse axialement l'enveloppe (2) ainsi constituée vers l'extrémité libre du tube (20). Le diamètre extérieur du tube (20) donne donc très exactement le diamètre intérieur de l'enveloppe (2), en forme et en dimension.

Le tube (20) reçoit intérieurement deux conduites (23) et (24) pour, respectivement, l'amenée d'isocyanate et de polyol. L'isocyanate est délivré liquide à partir d'un réservoir (25) par une pompe doseuse (26). Le polyol est délivré, également liquide, à partir d'un réservoir (27) par une pompe doseuse (28). Comme montré à la figure 21, les conduites (23, 24) s'étendent longitudinalement jusqu'à l'extrémité libre du tube (20) pour constituer, dans cette zone, une tête de mélange de l'isocyanate et du polyol qui sont délivrés ensemble dans l'enveloppe hélicoïdale (2) préalablement formée sur le tube (20). Dès leur mise en contact, l'isocyanate et le polyol, dosés par les pompes (26) et (28), entament une réaction rapide de polyaddition à l'intérieur même de l'enveloppe (2), laquelle résiste facilement à la faible pression radiale résultant du moussage.

Un poste de tronçonnage, comportant un moteur (29) et un outil de coupe telle une scie circulaire (30), est disposé en aval de l'extrémité libre du tube (20), à une distance suffisante pour que le moussage soit terminé au moment du tronçonnage. Le moteur (29) et l'outil (30) sont avantageusement montés sur un dispositif coulissant accompagnant le déplacement axial de l'article lors du tronçonnage selon une vitesse égale à la vitesse d'avancement de l'article (1, 2).

Bien entendu, d'autres modes de mise en oeuvre du procédé et d'autres modes de réalisation de l'appareil, ainsi que diverses variantes, peuvent être prévus sans sortir du cadre de l'invention. En premier lieu, il est clair que certains des éléments constitutifs de l'appareil des figures 13 à 17 peuvent être adaptés sans autre difficulté à l'appareil des figures 18 à 21, et inversement, notamment les moyens d'amenée de la matière constitutive de l'âme (1), les moyens de coupe de l'article fini, les moyens pour conformer l'enveloppe autour de l'élément creux fixe (7) ou (20) et les moyens pour entraîner l'article par une poussée ou par une traction exercée sur l'enveloppe (2).

Pour fabriquer un article allégé à section évidée, on pourra prévoir une filière spéciale (31), doté d'au moins un noyau plein s'étendant hors du tube (7) sur une longueur substantielle et schématisé en pointillés (34) à la figure (17).

Le procédé et l'appareil selon l'invention sont particulièrement intéressants, du fait que l'on utilise l'enveloppe elle-même comme moule pour la formation de l'âme, que l'entraînement de l'article s'effectue par une traction ou par une poussée de l'enveloppe exclusivement, que l'on peut donc travailler à des très grandes vitesses, dépassant facilement 60 m/mn, et qu'il n'est pas nécessaire de refroidir l'âme, même dans le cas où l'enveloppe est en matière thermoplastique.

Le procédé et l'appareil selon l'invention son également intéressants par le fait qu'ils rendent possible la fabrication de tout profilé, plein ou creux, quelle que soit la section de ce profilé et quelle que soit également la régularité de cette section : c'est en effet la section extérieure de l'élément fixe (7, 20), élaboré quant à lui avec la plus grande précision en atelier, qui détermine par équivalence la section du profilé (1, 2) réalisé immédiatement en aval dudit élément fixe.

L'invention est susceptible de nombreuses applications. Par exemple, dans le domaine de l'emballage, l'article selon l'invention peut être utilisé comme organe de renforcement, d'entretoise, d'intercalage, de cale, de pied, de plot, ou encore de cornière de protection. Dans le cas du génie civil, l'article selon l'invention peut être utilisé comme élément de coffrage ou encore comme poteau de signalisation. Dans l'application à l'industrie du meuble, l'article selon l'invention peut être utilisé comme élément de renfort ou comme panneau. Dans les application agricoles, il peut être utilisé comme tuteur ou comme poteau. L'article selon l'invention trouve également une application intéressante dans le domaine de l'isolation thermique et/ou phonique.

Suivant qu'il est destiné à un usage unique ou à des usages répétés, l'article selon l'invention peut être constitué à base de matériaux courants peu onéreux, voire de matériaux de récupération que l'on réemploie, ou à base de matières plus nobles, notamment pour les applications de haute technologie.

**Revendications**

1. Procédé de fabrication d'un article composite de section constante, pleine ou creuse, ledit article comprenant une âme (1) et une enveloppe extérieure (2) qui entoure au moins une fois ladite âme et adhère fermement à celle-ci, ledit procédé étant caractérisé en ce qu'il consiste : à conformer au moins une bande de matière souple autour d'un élément creux fixe (7, 20) pour constituer l'enveloppe (2) ; à entraîner en continu l'enveloppe (2) ainsi formée vers l'extrémité libre de l'élément creux fixe ; et à distribuer en continu à partir d'une réserve (8, 13, 25, 27), où elle est fluide ou pâteuse, la matière de constitution de l'âme (1) dans l'élément creux fixe, à partir d'une extrémité de celui-ci vers ladite extrémité libre, pour que, à la sortie de l'élément creux, ladite matière soit reçu dans le moule que constitue l'enveloppe (2), et s'y développe en refroidissant et en adhérant à l'enveloppe.

2. Procédé selon la revendication 1, caractérisé en ce que l'on entraîne ledit article par une poussée ou par une traction exercée sur l'enveloppe (2) en une zone située en amont de l'extrémité libre de sortie de l'élément creux fixe (7, 20).

3. Procédé selon l'une des revendications 1 et 2, caractérisé en ce que l'on effectue un tronçonnage de l'article en aval de l'extrémité libre de sortie de l'élément creux fixe.

4. Procédé selon l'une des revendications 1 à 3, caractérisé en ce que la bande est présentée longitudinalement par rapport à l'élément creux fixe (1) et en ce que ses bords longitudinaux sont progressivement rabattus l'un vers l'autre pour venir en chevauchement.

5. Procédé selon l'une des revendications 1 à 3, caractérisé en ce que la bande est présentée obliquement par rapport à l'axe de l'élément creux fixe, pour être enroulée en hélice autour dudit élément creux.

6. Procédé selon l'une des revendications 1 à 5, caractérisé en ce que l'on utilise, comme matière de constitution de l'âme, une matière expansée, à cellules ouvertes ou fermées, issue de la transformation d'un matériau thermoplastique en association avec un agent de nucléation, par exemple un gaz.

7. Procédé selon l'une des revendications 1 à 5, caractérisé en ce que l'on réalise la matière de constitution de l'âme à partir d'au moins deux constituants, que l'on mélange ces constituants à l'intérieur de l'élément creux fixe (20), à proximité de son extrémité libre, chaque constituant étant distribué (en 23, 24) dans l'élément creux fixe sous forme fluide ou pâteuse à partir d'une réserve (25, 27) placée en amont dudit élément creux fixe.

8. Appareil pour la fabrication d'un article composite de section constante comprenant une âme (1) et une envoloppe extérieure (2) qui entoure au moins une fois ladite âme et adhère fermement à celle-ci, ledit appareil comprenant des moyens (5, 36) pour délivrer en continu au moins une bande de matière souple et des moyens pour distribuer en continu, à partir d'une réserve (8, 13, 25, 27), la matière de constitution de l'âme (1) alors fluide ou pâteuse jusqu'à la mettre en contact avec la ou les bandes, caractérisé en ce qu'il comporte : un élément creux fixe (7, 20) de réception de chaque bande sur sa surface extérieure ; des moyens (6, 21) pour conformer chaque bande autour de l'élément creux fixe et constituer ainsi l'enveloppe (2) ; des moyens (15, 21) pour entraîner en continu l'enveloppe (2) ainsi formée vers l'extrémité libre de l'élément creux fixe ; et des moyens (10, 14, 26, 28) pour faire passer la matière de constitution de l'âme de la réserve jusqu'à l'extrémité libre de l'élément creux fixe, au travers dudit élément, et pour distribuer ladite matière à l'intérieur du moule que constitue l'enveloppe (2) pour qu'elle s'y développe en refroidissant et en adhérant à l'enveloppe.

9. Appareil selon la revendication 8, caractérisé en ce qu'il comporte des moyens (15, 21) d'entraînement de l'article composite placés en amont de l'extrémité libre de l'élément creux fixe.

10. Appareil selon la revendication 9, caractérisé en ce que les moyens d'entraînement (15) de l'article composite opèrent par traction sur l'enveloppe (2) et débordent largement l'élément creux fixe (7, 20) du côté de son extrémité libre.

11. Appareil selon la revendication 9, caractérisé en ce que les moyens d'entraînement (21) de l'article composite opèrent par poussée sur l'enveloppe (2).

12. Appareil selon l'une des revendications 8 à 11, caractérisé en ce qu'il comporte des moyens (16, 29, 30) de tronçonnage de l'article composite disposés en aval de l'extrémité libre de l'élément creux fixe.

13. Appareil selon l'une des revendications 8 à 12, caractérisé en ce que les moyens de conformation de la bande sont constitués par un guide fixe (6) à profil évolutif, ledit guide étant propre à recevoir la bande en position longitudinale par rapport à l'élément creux fixe (7) et à rabattre progressivement les bords de la bande l'un vers l'autre jusqu'à les amener en chevauchement.

14. Appareil selon l'une des revendications 8 à 12, caractérisé en ce que les moyens de conformation et les moyens d'entraînement continu de la bande sont constitués par une courroie mobile ou analogue (21) qui plaque la bande en hélice sur l'élément creux fixe (20) et la pousse axialement vers l'extrémité libre de celui-ci.

15. Appareil selon l'une des revendications 8 à 14, caractérisé en ce que des moyens (17-19, 32) sont prévus pour déposer un adhésif sur au moins un bord de la bande avant sa conformation finale autour de l'élément creux fixe (7, 20).

16. Appareil selon l'une des revendications 8 à 15, caractérisé en ce qu'il comporte, en bout de l'élément creux fixe, des moyens (34) pour former au moins un évidement (3) intérieur à l'article composite à délivrer.

17. Appareil selon l'une des revendications 8 à 16, caractérisé en ce qu'il comporte des moyens (8-10, 13, 14) pour distribuer, à l'intérieur de l'élément creux fixe, un mélange de matière thermoplastique comportant un agent de nucléation, par exemple un gaz, apte à former une mousse à cellules ouvertes ou fermées lors de son expansion.

18. Appareil selon l'une des revendications 8 à 16, caractérisé en ce qu'il comporte des moyens (23, 24) pour mélanger tous les constituants de la matière de constitution de l'âme, lesdits moyens étant de préférence disposés pour coopérer à proximité de l'extrémité libre de l'élément creux fixe.

19. Appareil selon l'une des revendications 8 à 18, caractérisé en ce qu'il comporte des moyens (33) d'aspiration de l'enveloppe qui coopèrent avec ses moyens d'entraînement (15).

20. Article composite de section constante, pleine ou évidée, destiné à divers usages, du type comprenant une âme (1) et une enveloppe extérieure (2) entourant au moins une fois ladite âme et adhérant fermement à celle-ci, caractérisé en ce que la densité de l'âme (1) est comprise entre environ 10 Kg/m$^3$ et 500 Kg/m$^3$ et vaut de préférence environ 50 Kg/m$^3$ et en ce que la matière formant ladite âme (1) appartient au groupe constitué par le polyéthylène, le polypropylène, le polystyrène, et le chlorure de polyvinyle.

21. Article composite selon la revendication 20 caractérisé en ce que l'enveloppe (2) est constituée par au moins une feuille pleine ou ajourée.

22. Article composite selon l'une des revendications 20 et 21, caractérisé en ce que l'enveloppe (2) présente au moins une couche de matière.

23. Article composite selon l'une des revendications 20 à 22, caractérisé en ce qu'il présente une section circulaire, ovale ou polygonale, par exemple carrée, rectangulaire.

24. Article composite selon l'une des revendications 20 à 23, caractérisé en ce qu'il se présente sous la forme d'un cylindre, d'une latte, d'un panneau ou d'une dalle.

25. Article composite selon l'une des revendications 20 à 24, caractérisé en ce que son âme (1) est évidée, notamment en son centre.

26. Article composite selon l'une des revendications 20 à 25, caractérisé en ce que son âme (1) est souple, rigide ou semi-rigide.

27. Article composite selon l'une des revendications 20 à 26, caractérisé en ce que la matière formant l'enveloppe (2) appartient au groupe constitué par le papier, la cartonnette, les matières textiles, les matières synthétiques, notamment thermoplastiques, les matières fibreuses non tissées, naturelles ou synthétiques, et leurs combinaisons.

28. Article composite selon l'une des revendications 20 à 27, caractérisé en ce que l'enveloppe est recouverte, sur tout ou partie de sa face extérieure, par une mousse expansée.

29. Article composite selon l'une des revendications 20 à 28, caractérisé en ce que son enveloppe extérieure est à enroulement hélicoïdal.

## Claims

1. A process for fabricating a solid or hollow composite article of constant cross-section, the article comprising a core (1) and an outer envelope (2) which encircles the said core at least once and strongly adheres to the latter, the process being characterised in that it comprises: layering at least one tape of flexible material around a fixed hollow element (7, 20) to form the envelope (2); continuously feeding the envelope (2) thus formed around the fixed hollow element, up to at least the open end of the said element; and continuously feeding the material which constitutes the core, from a supply (8, 13, 25, 27) which may be in the form of a fluid or a paste, through the fixed hollow element up to the open end of the latter, so that when it emerges from the hollow element the said material is received at the outlet of the hollow element in the closed mould formed by the envelope (2), where it sets , while cooling and adhering to the said envelope.

2. A process according to claim 1, characterised in that the said article is fed by a thrust or a pull exerted on the envelope (2) in an area situated upstream of the open outlet end of the fixed hollow element (7, 20).

3. A process according to claims 1 and 2, characterised in that the article is cut into lengths below the open outlet end of the fixed hollow element.

4. A process according to one of claims 1 to 3, characterised in that the tape is applied lengthways in relation to the fixed hollow element (1) and that its longitudinal edges are progressively folded back towards each other until they overlap.

5. A process according to one of claims 1 to 3, characterised in that the tape is applied obliquely in relation to the axis of the fixed hollow element, so that it can be wrapped helically round the said hollow element.

6. A process according to one of claims 1 to 5, characterised by the use, as the material comprising the core, of an expanded material with open or closed cells, obtained from the interaction of a thermoplastic material with a nucleating agent, for example a gas.

7. A process according to one of claims 1 to 5, characterised that the material comprising the core is produced from at least two components, which are mixed inside the fixed hollow element (20) adjacent to its open end, each component being fed (via 23, 24) into the fixed hollow element in fluid or pasty form from a supply (25, 27) placed upstream of the said fixed hollow element.

8. An apparatus for manufacturing a composite article of constant cross-section comprising a core (1) and an outer envelope (2) which encircles the said core at least once and adheres strongly to it, the said apparatus comprising means (5, 36) for continuously supplying at least one tape of flexible material, a fixed hollow element (7, 20) for receiving the tape and for forming the envelope (2) from this tape, and means of continuously feeding, from a supply (8, 13, 25, 27), the material which constitutes the core (1) in fluid or pasty form until it comes into contact with the envelope, characterised in that it comprises: means (6, 21) of receiving each tape and layering it around the fixed hollow element in order thus to form the envelope (2); means (15, 21) of continuously displacing the envelope (2) thus formed around the fixed hollow element, up to at least the open end of the latter; and means (10, 14, 26, 28) of feeding the material which constitutes the core from the supply to the open end of the fixed hollow element, through the said element, and of distributing the said material inside the closed mould which is formed by the envelope (2), so that it sets, whilst cooling and adhering to the said envelope.

9. An apparatus according to claim 8, characterised in that it comprises means (15, 21) of moving the composite article placed upstream of the open end of the fixed hollow element.

10. An apparatus according to claim 9, characterised in that the means (15) of moving the composite article operate by pulling on the envelope (2) and project extensively beyond the fixed hollow element on the side of its open end.

11. An apparatus according to claim 9, characterised in that the means (21) of moving the article operate by exerting a thrust on the envelope (2).

12. An apparatus according to one of claims 8 to 11, characterised in that it comprises means (16, 29, 30) of cutting the composite article into lengths, which are disposed downstream of the open end of the fixed hollow element.

13. An apparatus according to one of claims 8 to 12, characterised in that the means of layering the tape comprise a fixed guide (6) of variable profile, the said guide being suitable for receiving the tape lengthways in relation to the fixed hollow element (7) and for progressively folding back the edges of the tape towards each other until they overlap.

14. An apparatus according to one of claims 8 to 12, characterised in that the means of layering and the means of continuously feeding the tape comprise a moving belt or similar, which lays the tape helically on the fixed hollow element (20) and pushes it axially towards the free end of the latter.

15. An apparatus according to one of claims 8 to 14, characterised in that means (17-19, 32) are provided for applying an adhesive to at least one side of the tape before its final layering around the fixed hollow element (7, 20).

16. An apparatus according to one of claims 8 to 15, characterised in that it comprises, in the end of the fixed hollow element, means (34) of forming at least one internal void (3) in the composite article to be produced.

17. An apparatus according to one of claims 8 to 16, characterised in that it comprises means (8-10, 13, 14) of distributing, within the fixed hollow element, a mixture of thermoplastic material comprising a nucleating agent, for example a gas, suitable for forming a foam with open or closed cells on expansion.

18. An apparatus according to one of claims 8 to 16, characterised in that it comprises means (23, 24) of mixing all the components of the material which constitutes the core, the said means preferably being provided so that they act together adjacent to the open end of the fixed hollow element.

19. An apparatus according to one of claims 8 to 18, characterised in that it comprises means (33) of applying suction to the envelope which operate in conjunction with the means (15) of moving it.

20. A solid or hollow composite article of constant cross-section, intended for various uses, of a type comprising a core (1) and an outer envelope (2) which encircles the said core at least once and strongly adheres to the latter, characterised in that the density of the core (1) is between about 10 kg/m$^3$ and 500 kg/m$^3$, preferably about 50 kg/m$^3$, and that the material forming the said core (1) is selected from the group comprising polyethylene, polypropylene, polystyrene and polyvinyl chloride.

21. A composite article according to claim 20, characterised in that the envelope (2) comprises at least one solid or perforated sheet.

22. A composite article according to one claims 20 and 21, characterised in that the envelope (2) comprises at least one layer of material.

23. A composite article according to one of claims 20 to 22, characterised in that it has a cross-section which is circular, oval or polygonal, for example square or rectangular.

24. A composite article according to one of claims 20 to 23, characterised in that it has the form of a cylinder, a tile, a panel or a slab.

25. A composite article according to one of claims 20 to 24, characterised in that its core (1) is hollow, especially in the centre.

26. A composite article according to one of claims 20 to 25, characterised in that its core (1) is flexible, rigid, or semi-rigid.

27. A composite article according to one of claims 20 to 26, characterised in that the material which forms the envelope is selected from the group comprising paper, cardboard, textile materials, synthetic materials, especially thermoplastics, non-woven natural or synthetic fibrous materials, and their combinations.

28. A composite article according to one of claims 20 to 27, characterised in that the envelope is covered on all or part of its outer surface by an expanded foam.

29. A composite article according to one of claims 20 to 28, characterised in that its outer envelope is wound helically.

**Ansprüche**

1. Verfahren zur Herstellung eines Verbundkörpers mit konstantem, vollem oder hohlem Querschnitt, welcher Körper einen Kern (1) und eine äußere Umhüllung (2) aufweist, die den genannten Kern wenigstens einmal umschließt und fest an diesem haftet, **dadurch gekennzeichnet**, daß es umfaßt: Anformen wenigstens eines Bandes aus weichem Material an ein festes hohles Element (7,20) um die Umhüllung (2) zu bilden; kontinuierliches Fortbewegen der so um das hohle, feste Element gebildeten Umhüllung (2) und wenigstens bis zum freien Ende des genannten hohlen, festen Elements; und kontinuierliches Abgeben des den Kern (1) bildenden Materials aus einem Vorratsbehälter (8,13,25,27), wo es sich in fluidem oder pastösem Zustand befindet, durch das hohle, feste Element hindurch und bis zum freien Ende desselben, damit am Ausgang des hohlen Elements das genannte Material nach dem Verlassen des hohlen Elements von der geschlossenen Form aufgenommen wird, die die Umhüllung (2) bildet, und sich dort unter Abkühlung und unter Anhaften an der Umhüllung entwickelt.

2. Verfahren nach Anspruch 1, dadurch gekennzeichnet, daß man den genannten Körper durch einen Schub oder durch einen Zug fortbewegt, der auf die Umhüllung (2) in einer Zone einwirkt, die stromaufwärts des freien Ausgangsendes des hohlen, festen Elements (7,20) liegt.

3. Verfahren nach einem der Ansprüche 1 und 2, dadurch gekennzeichnet, daß man eine Zertrennung des Körpers stromabwärts des freien Ausgangsendes des hohlen, festen Elements ausführt.

4. Verfahren nach einem der Ansprüche 1 bis 3, dadurch gekennzeichnet, daß das Band in Längsrichtung in Bezug auf das hohle, feste Element (1) angeboten wird und daß seine Längsränder progressiv gegeneinander umgeschlagen werden, um in Überlappung zu gelangen.

5. Verfahren nach einem der Ansprüche 1 bis 3, dadurch gekennzeichnet, daß das Band schräg gegenüber der Achse des hohlen, festen Elements angeboten wird, um wendelförmig um das genannte hohle Element gewickelt zu werden.

6. Verfahren nach einem der Ansprüche 1 bis 5, dadurch gekennzeichnet, daß man als kernbildendes Material expandiertes, offenoder geschlossenzelliges Material verwendet, das aus der Umwandlung eines thermoplastischen Materials zusammmen mit einem Nukleationsmittel, beispielsweise einem Gas, entstanden ist.

7. Verfahren nach einem der Ansprüche 1 bis 5, dadurch gekennzeichnet, daß man das kernbildende Material aus wenigstens zwei Bestandteilen herstellt, daß man das Gemisch dieser Bestandteile im Innern des hohlen, festen Elements (20) nahe seinem freien Ende vermischt, wobei jeder Bestandteil in das hohle, feste Element in flüssiger oder pastöser Form aus einem Vorratsbehälter (25,27) abgegeben wird (bei 23,24), der stromaufwärts des genannten hohlen, festen Elements angeordnet ist.

8. Vorrichtung zur Herstellung eines Verbundkörpers mit konstantem Querschnitt, der einen Kern (1) und eine äußere Umhüllung (2) aufweist, die den Kern wenigstens einmal umgibt und fest an diesem haftet, enthaltend Einrichtungen (5,36) zum kontinuierlichen Abgeben wenigstens eines Bandes aus weichem Material, ein hohles, festes Element (7,20) zum Entgegennehmen des Bandes und zum Bilden der Umhüllung (2) aus diesem Band, und Einrichtungen zum kontinuierlichen Abgeben des den Kern (1) bildenden Materials aus einem Vorratsbehälter (8,13,25,27), das bis zur Berührung mit der Umhüllung noch flüssig oder pastös ist, dadurch gekennzeichnet, daß sie enthält: Einrichtungen (6,21) zum Entgegennehmen jedes Bandes und zum Umschließen des hohlen, festen Elements mit diesem, um so die Umhüllung (2) zu bilden; Einrichtungen (15,21) zum kontinuierlichen Fortbewegen der so um das hohle, feste Element gebildeten Umhüllung wenigstens bis zum freien Ende desselben; und Einrichtungen (10,14,26,28), um das kernbildende Material aus dem Vorratsbehälter bis zum freien Ende des hohlen, festen Elements durch das genannte Element hindurchzulassen und um das genannte Material in das Innere der geschlossenen Form abzugeben, die die Umhüllung (2) bildet, damit es sich dort unter Abkühlung und Anhaften an die genannte Umhüllung entwickelt.

9. Vorrichtung nach Anspruch 8, dadurch gekennzeichnet, daß sie Einrichtungen (15,21) zum Fortbewegen des Verbundkörpers aufweist, die stromaufwärts dem freien Ende des hohlen, festen Elements angeordnet sind.

10. Vorrichtung nach Anspruch 9, dadurch gekennzeichnet, daß die Fortbewegungseinrichtungen (15) für den Verbundkörper durch Zug auf die Umhüllung (2) einwirken und über das hohle, feste Element (7,20) auf der Seite dessen freien Endes weit vorstehen.

11. Vorrichtung nach Anspruch 9, dadurch gekennzeichnet, daß die Fortbewegungseinrichtungen (21) für den Verbundkörper durch Schub auf die Umhüllung (2) einwirken.

12. Vorrichtung nach einem der Ansprüche 8 bis 11, dadurch gekennzeichnet, daß sie Einrichtungen (16,29,30) zum Zertrennen des Verbundkörpers aufweist, die stromabwärts des freien Endes des hohlen, festen Elements angeordnet sind.

13. Vorrichtung naoh einem der Ansprüche 8 bis 12, dadurch gekennzeichnet, daß die Einrichtungen zum Verformen des Bandes von einer festen Führung (6) mit sich erweiterndem Profil gebildet sind, die dazu geeignet ist, das Band in Längsrichtung im Bezug auf das hohle, feste Element (7) entgegenzunehmen und progressiv die Ränder des Bandes gegeneinander umzuschlagen, um sie schließlich in Überlappung zu bringen.

14. Vorrichtung nach einem der Ansprüche 8 bis 12, dadurch gekennzeichnet, daß die Verformungseinrichtungen und die Einrichtungen zum kontinuierlichen Fortbewegen des Bandes von einem beweglichen Riemen (21) oder dgl. gebildet sind, der das Band wendelförmig auf das hohle, feste Element (20) legt und es in axialer Richtung gegen das freie Ende desselben schiebt.

15. Vorrichtung nach einem der Ansprüche 8 bis 14, dadurch gekennzeichnet, daß Einrichtungen (17 bis 19, 32) vorgesehen sind, um einen Klebstoff auf wenigstens einen Rand des Bandes vor seiner endgültigen Anpassung um das hohle, feste Element (7,20) aufzubringen.

16. Vorrichtung nach einem der Ansprüche 8 bis 15, dadurch gekennzeichnet, daß sie am Ende des hohlen, festen Elements Einrichtungen (24) zum Ausbilden wenigstens eines Hohlraums (3) im Innern des abzugebenden Verbundkörpers aufweist.

17. Vorrichtung nach einem der Ansprüche 8 bis 16, dadurch gekennzeichnet, daß sie Einrichtungen zum Abgeben eines Gemischs aus thermoplastischem Material, das ein Nukleationsmittels, beispielsweise ein Gas enthält, das zur Bildung eines offen- oder geschlossenzelligen Schaums bei Expansion geeignet ist, in das Innere des hohlen, festen Elements aufweist.

18. Vorrichtung nach einem der Ansprüche 8 bis 16, dadurch gekennzeichnet, daß sie Einrichtung (23,24) aufweist, um alle Bestandteile des den Kern bildenden Materials zu durchmischen, welche Einrichtungen vorzugsweise so angeordnet sind, daß sie nahe dem freien Ende des hohlen, festen Elements zusammenwirken.

19. Vorrichtung nach einem der Ansprüche 8 bis 18, dadurch gekennzeichnet, daß sie Einrichtungen (33) zum Ansaugen der Umhüllung aufweist, die mit ihren Fortbewegungseinrichtungen (15) zusammenwirken.

20. Verbundkörper mit konstantem, vollem oder holem Querschnitt, der für verschiedene Verwendungen bestimmt ist, enthaltend einen Kern (1) und eine äußere Umhüllung (2), die den genannten Kern wenigstens einmal umgibt und fest an diesem haftet, dadurch gekennzeichnet, daß die Dichte des Kerns (1) zwischen etwa 10 kg/m$^3$ und 500 kg/m$^3$ liegt und vorzugsweise etwa 50 kg/m$^3$ beträgt, und daß das den genannten Kern (1) bildende Material zu der Gruppe gehört, die von Polyethylen, Polypropylen, Polystyrol und Polyvinylchlorid gebildet ist.

21. Verbundkörper nach Anspruch 20, dadurch gekennzeichnet, daß die Umhüllung (2) von wenigstens einer geschlossenen oder durchbrochenen Folie gebildet ist.

22. Verbundkörper nach einem der Ansprüche 20 und 21, dadurch gekennzeichnet, daß die Umhüllung (2) wenigstens eine Material-schicht aufweist:

23. Verbundkörper nach einem der Ansprüche 20 bis 22, dadurch gekennzeichnet, daß er einen kreisförmigen, ovalen oder polygonalen, beispielsweise quadratischen, rechteckigen, Querschnitt aufweist.

24. Verbundkörper nach einem der Ansprüche 20 bis 23, dadurch gekennzeichnet, daß er die Form eines Zylinders, einer Latte, einer Tafel oder einer Platte hat.

25. Verbundkörper nach einem der Ansprüche 20 bis 24, dadurch gekennzeichnet, daß sein Kern (1) hohl ist, insbesondere in seiner Mitte.

26. Verbundkörper nach einem der Ansprüche 20 bis 25, dadurch gekennzeichnet, daß sein Kern (1) weich, steif oder halbsteif ist.

27. Verbundkörper nach einem der Ansprüche 20 bis 26, dadurch gekennzeichnet, daß das die Umhüllung (2) bildende Material zu der Gruppe gehört, die von Papier, Karton, Textilmaterialien, synthetischen, insbesondere thermoplastischen Materialien, nicht-gewebten natürlichen oder synthetischen Fasermaterialien, und ihren Kombinationen gebildet ist.

28. Verbundkörper nach einem der Ansprüche 20 bis 27, dadurch gekennzeichnet, daß die Umhüllung ganz oder teilweise auf ihrer Außenseite von einem expandierten Schaum bedeckt ist.

29. Verbundkörper nach einem der Ansprüche 20 bis 28, dadurch gekennzeichnet, daß seine äußere Umhüllung wendelförmig gewickelt ist.

FIG.1

FIG.2

FIG.3

FIG.4

FIG.5

FIG.6

FIG. 7

FIG.8

FIG.9

FIG.10

FIG.11

FIG.12

FIG.14  FIG.15  FIG.16

FIG.13

FIG.17

EP 0 270 462 B1

FIG.18

FIG.19

FIG.20

FIG.21